# EUROPÄISCHE PATENTSCHRIFT

(11) **EP 3 621 185 B1**
(45) Veröffentlichungstag und Bekanntmachung des Hinweises auf die Patenterteilung: **23.03.2022**
(21) Anmeldenummer: 19195480.9
(22) Anmeldetag: 05.09.2019
(51) Int. Cl.: H02K 15/06

(54) **VERFAHREN UND VORRICHTUNG ZUM HERSTELLEN EINER ANORDNUNG VON SPULENELEMENTEN FÜR EINE STECKSPULE EINER ELEKTRISCHEN MASCHINE**
METHOD AND DEVICE FOR PRODUCING AN ARRANGEMENT OF COIL ELEMENTS FOR A PLUG-IN COIL OF AN ELECTRIC MACHINE
PROCÉDÉ ET DISPOSITIF DE FABRICATION D'UN AGENCEMENT D'ÉLÉMENTS DE BOBINE À INSÉRER POUR UNE BOBINE D'UNE MACHINE ÉLECTRIQUE

(30) Priorität: 06.09.2018 DE 102018121745
(43) Veröffentlichungstag der Anmeldung: 11.03.2020
(73) Patentinhaber: Aumann AG, 48361 Beelen (DE)
(72) Erfinder: Luettge, Wolfgang, 31787 Hameln (DE)
(74) Vertreter: Bittner, Thomas L.

(56) Entgegenhaltungen:
- WO-A1-2013/153594
- WO-A2-2018/039806
- GB-A- 644 761
- JP-A- 2004 072 839
- US-A1- 2016 233 749

## Beschreibung

Die Erfindung betrifft ein Verfahren und eine Vorrichtung zum Herstellen einer Anordnung von Spulenelementen für eine Steckspule einer elektrischen Maschine.

### Hintergrund

Solche Technologien werden genutzt, um ein- oder mehrlagige Anordnungen von Spulenelementen zu fertigen, die dann als Anordnung insgesamt in einen Spulenkern eingesteckt wird, sodass Abschnitte der Spulenelemente in zugeordneten Nuten des Spulenkerns angeordnet sind. Beispielsweise kann hierbei vorgesehen sein, eine geschlossene Anordnung von Spulenelementen herzustellen, insbesondere eine korbähnliche Anordnung von Spulenelementen, bei der beispielsweise die eine oder die mehreren Lagen der Spulenelemente einer Umfangsfläche eines Kreiszylinder entsprechend angeordnet sind.

In dem Dokument US 2016 / 233749 A1 sind ein Ausrichtungsverfahren und eine Ausrichtvorrichtung offenbart, mit denen sich die Beinteile benachbarter Leiter unmittelbar vor dem Ausrichten nicht gegenseitig behindern. Bei dem Ausrichtungsverfahren werden durch Bereitstellen mehrerer Spulenelemente in einer ringförmigen Form und Bewegen der mehreren Spulenelemente in einer Richtung, in der der Durchmesser der ringförmigen Form verringert wird, die mehreren Spulenelemente in einem Zustand ausgerichtet, in dem sich an im wesentlichen scheitelförmigen Abschnitten vorgesehene Windungsabschnitte abwechselnd überlappen, wobei die mehreren Spulenelemente ausgerichtet sind, indem jedes der mehreren Spulenelemente in Richtung eines ringförmigen Zentrums bewegt wird und dabei die mehreren Spulenelemente um eine Drehachse gedreht werden, die parallel zur Mittelachse der Ringform ist.

Das Dokument JP 2004 072839 A betrifft ein Verfahren zum ringförmigen Ausrichten eines Spulenabschnitts. Spulensegmente in einer einem U angenäherten Form werden über den gesamten Umfang für eine Umdrehung in eine Aussparung eines hutartigen ringförmigen Ausrichtungswerkzeugs 1 zum Einsetzen eingestellt. Mit anderen Worten wird ein gerader Teil des Spulensegments eingeführt, während die Spulensegmente für eine Umdrehung des gesamten Umfangs zueinander gedreht werden, bis der andere gerade Teil auf eine äußere Umfangsfläche trifft, so dass die Spulensegmente für eine Umdrehung des gesamten Umfangs ringförmig ausgerichtet sind. Ein nächstes hutartiges Zwischenausrichtungswerkzeug wird so aufgesetzt, dass ein Satz von Spulensegmenten nicht beim Wiederholen des gleichen Vorgangs gestört wird. Somit wird eine Anordnung von Spulensegmenten aus mehreren Umdrehungen gebildet, die einer Segmentspule mit mehreren Schichten entsprechen, die so wie sie ist in den Schlitz eines Statorkerns eingeführt wird.

In dem Dokument WO 2013 / 153594 A1 ist eine Montagevorrichtung für ein Statorherstellungsverfahren beschrieben, die zum Bilden einer ringförmigen Anordnung verwendet wird, indem mehrere Segmente ringförmig angeordnet zusammengesetzt werden. Die Montagevorrichtung umfasst einem Haltemittel, das mehrere Stützstangen aufweist, die radial vorgesehen sind und in radialer Richtung zurückgezogen werden können, und die Stützstangen durch Zwischensegmenträume einführt, die auf einer zylindrischen Umfangsfläche ausgebildet sind, die durch den Satz ringförmig angeordneter Segmente gebildet wird, um den Satz ringförmig angeordneter Segmente in einer hängenden Weise zu halten. Die Montagevorrichtung umfasst weiter ein Mittel zur Erweiterung des Durchmessers, das den Durchmesser des Satzes ringförmig angeordneter Segmente auf einen Wert erweitert, der größer als ein Konstruktionswert ist, und ein Mittel zur Reduzierung des Durchmessers, das den Durchmesser auf einen vorbestimmten Durchmesser reduziert.

Das Dokument GB 644 761 A offenbart eine Maschine zum axialen Einführen von Hairpin-Leitern in Ankerschlitze. Die Maschine hat eine bewegliche untere Stütze zum Anheben der Leiter in einem Halter, in dem sie manuell in einer festen oberen Stütze angeordnet sind, wobei Finger zum zueinander beabstandeten Halten der Leiter manuell angebracht wurden. Daraufhin wird der leere Halter (nach dem Absenken des unteren Trägers) durch den Ankerkern ersetzt, der so angehoben wird, dass der Leiter gerade in seine Schlitze eintritt. Die Leiter werden dann von einem Stößel nach unten in die Schlitze gedrückt, dessen anfängliche Bewegung eine Freigabe der Leiterhaltefinger bewirkt. Der Stößel wird durch Flüssigkeitsdruck nach unten zu den Enden der Leiter bewegt, und unmittelbar vor seiner Bewegung können zusätzliche Mittel den Kern sowie den mit Flüssigkeit betriebenen Kolben halten, der zum Anheben und Absenken der unteren Stütze für die vorhergehenden Vorgänge verwendet wird. Sobald die Leiter in den Schlitzen positioniert sind, wird der Stößel angehoben und die untere Stütze mit dem gewickelten Anker entriegelt und abgesenkt.

Das Dokument WO 2018 / 039806 A2 beschreibt ein Verfahren und ein System zum Zusammenbauen von Haarnadelleitern mit einem Statorkern. Das System und das Verfahren umfassen das Anordnen der mehreren Haarnadelleiter in zwei oder mehr Unterbaugruppenvorrichtungen, wobei die mehreren Haarnadelleiter in den zwei oder mehr Unterbaugruppenvorrichtungen in zwei oder mehr Schichten angeordnet sind, das Aktivieren eines Haltemechanismus, um die Vielzahl von Haarnadelleitern innerhalb der Unterbaugruppenvorrichtungen an Ort und Stelle zu halten; das Ineinandergreifen der zwei oder mehr Unterbaugruppenvorrichtungen, um die Haarnadelleiter in Ausrichtung zu bringen und eine geschichtete Leiteranordnung zu bilden; das Einführen der Schichtleiteranordnung in den Statorkern durch auf die für die Schichtleiteranordnung vorgesehenen Stellen auf dem Statorkern ausgerichtetes Vorschieben der zwei oder mehr Unterbaugruppenbefestigungen relativ zum Statorkern; und das Deaktivieren des Haltemechanismus zu einem geeigneten Zeitpunkt, um die Schichtleiteranordnung von den zwei oder mehr Unterbaugruppenvorrichtungen zu lösen.

### Zusammenfassung

Aufgabe der Erfindung ist es, ein Verfahren und eine Vorrichtung zum Herstellen einer Anordnung von Spulenelementen für eine Steckspule einer elektrischen Maschine anzugeben, mit denen die Spulenelemente beim Ausbilden der Anordnung auf effiziente Art und Weise eingebracht werden können, insbesondere auch im Rahmen einer Massenfertigung solcher Anordnungen von Spulenelementen. Auch soll Flexibilität hinsichtlich konkreter Merkmale einer Wicklung geschaffen werden, die mit den Spulenelementen gebildet wird, zum Beispiel betreffend Anzahl von Leitern, Anzahl von Nuten, Anzahl von Lagen, Wickelschema und / oder Spulenweite.

Zur Lösung sind ein Verfahren sowie eine Vorrichtung zum Herstellen einer Anordnung von Spulenelementen für eine Steckspule einer elektrischen Maschine nach den unabhängigen Ansprüchen 1 und 9 geschaffen. Ausgestaltungen sind Gegenstand von abhängigen Unteransprüchen.

Nach einem Aspekt ist ein Verfahren zum Herstellen einer Anordnung von Spulenelementen für eine Steckspule einer elektrischen Maschine geschaffen, wobei das Verfahren die folgenden Schritte aufweist: Bereitstellen eines Werkstückträgers und Herstellen einer mindestens einlagigen Anordnung von stabförmig ausgebildeten Spulenelementen für eine Steckspule einer elektrischen Maschine an dem Werkstückträger. Hierbei ist für die stabförmigen Spulenelemente jeweils Folgendes vorgesehen: Aufnehmen und Halten des Spulenelements mittels einer Verlagerungseinrichtung, Zustellen des Spulenelements auf den Werkstückträger mittels der Verlagerungseinrichtung in eine zugeordnete proximale Stellung am Werkstückträger, wobei die Spulenelemente hierbei in Bezug auf den Werkstückträger aus einer distalen Stellung in die zugeordnete proximale Stellung verlagert werden, und Übernehmen des Spulenelements in der proximalen Stellung am Werkstückträger von der Verlagerungseinrichtung durch eine Greifeinrichtung, die an dem Werkstückträger gebildet ist. Die mindestens einlagige Anordnung der Spulenelemente wird nach dem Übernehmen der Spulenelemente mittels der Greifeinrichtung an dem Werkstückträger gehalten.

Nach einem weiteren Aspekt ist eine Vorrichtung zum Herstellen einer Anordnung von Spulenelementen für eine Steckspule einer elektrischen Maschine geschaffen. Die Vorrichtung weist Folgendes auf: einen Werkstückträger, an dem eine mindestens einlagige Anordnung von stabförmig ausgebildeten Spulenelementen für eine Steckspule einer elektrischen Maschine herstellbar ist, eine Verlagerungseinrichtung, die eingerichtet ist, zum Herstellen der mindestens einlagigen Anordnung von Spulenelementen an dem Werkstückträger die Spulenelemente jeweils aufzunehmen und zu halten und auf den Werkstückträger zuzustellen, derart, dass die Spulenelemente jeweils in eine zugeordnete proximale Stellung am Werkstückträger verlagert wird, wobei die Spulenelemente hierbei in Bezug auf den Werkstückträger aus einer distalen Stellung in die zugeordnete proximale Stellung verlagert werden, und eine Greifeinrichtung, die eingerichtet ist, zum Herstellen der mindestens einlagigen Anordnung von Spulenelementen an dem Werkstückträger die Spulenelemente jeweils in der proximalen Stellung am Werkstückträger von der Verlagerungseinrichtung zu übernehmen und zu halten. Die Greifeinrichtung ist weiter eingerichtet, die mindestens einlagige Anordnung der Spulenelemente nach dem Übernehmen der Spulenelemente an dem Werkstückträger zu halten.

Mithilfe der vorgeschlagenen Technologien ist auf einfache und effiziente Art und Weise das Ausbilden der Anordnung von Spulenelementen für die Steckspule ermöglicht. Mithilfe der Verlagerungseinrichtung werden die Spulenelemente jeweils aufgenommen und gehalten, um diese dann auf den Werkstückträger zuzustellen. Dort werden die Spulenelemente in der zugeordneten proximalen Stellung durch die Greifeinrichtung übernommen, insbesondere jeweils individuell zugeordnete Greifelemente, um schließlich die gesamte Anordnung von Spulenelementen mittels der Greifeinrichtung an dem Werkstückträger zu halten, sodass die mindestens einlagige Anordnung der Spulenelemente als Gesamtanordnung einer Weiterverarbeitung zugeführt werden kann. Bei einer solchen Weiterverarbeitung kann vorgesehen sein, dass ein Übergabegreifer die Anordnung von Spulenelementen insgesamt greift und von dem Werkstückträger abnimmt, um die Anordnung der Spulenelemente einer weiteren Arbeitsstation zuzuführen, beispielsweise zum Einstecken von Abschnitten der Spulenelemente in zugeordnete Nuten eines Spulenkerns beim Herstellen einer Steckspule.

Die hergestellte (vormontierte) Anordnung kann als Teilwicklung eine vollständig geschlossene Kontur oder je nach gewünschtem Wickelschema Teilkonturen darstellen. Hierfür können je nach Bedarf Spulenelemente für eine nachfolgende Montage in der Prozesskette ausgelassen werden, sodass Bauräume für sekundäre Fertigungs- und Montageschritte belassen werden.

Es kann vorgesehen sein, dass die Anordnung der Spulenelemente als eine in sich geschlossene Anordnung von Spulenelementen hergestellt wird. Das Verfahren kann vorsehen, dass eine Anordnung von Spulenelementen hergestellt wird, bei der die mindestens eine Lage von Spulenelementen eine geschlossene umlaufende Oberfläche erfassend hergestellt wird, beispielsweise vergleichbar einer umlaufenden Wandung eines hohlen Kreiszylinders.

Es kann vorgesehen sein, die Schritte zum Herstellen einer Lage von Spulenelementen für die Anordnung zu wiederholen, um eine mehrlagige Anordnung von Spulenelementen an dem Werkstückträger herzustellen.

Es kann vorgesehen sein, einzelne in sich nicht geschlossene Anordnungen herzustellen, die sich in vor- und nachgelagerten Schritten zu einem beliebigen Wickelschema ergänzen lassen. Hierbei ist der Prozess unabhängig von Leiter- / Nutenzahl oder deren Anordnung.

Die stabförmigen Spulenelemente können beispielsweise eine U-Form aufweisen oder als sogenannte Hairpins, I-Pins oder D-Pins ausgebildet sein.

Das hergestellte Produkt muss keine spezifischen Designanforderungen erfüllen und ist daher flexibel in der Gestaltung der Wicklung, insbesondere hinsichtlich Wickelschema, Leiterzahl und Nutenzahl.

Die Greifeinrichtung ist mit Greifelementen gebildet, die beim Übernehmen des Spulenelementes dieses greifen und halten. Beim Übernehmen und / oder Halten der Spulenelemente durch die / an der Greifeinrichtung können mechanische und / oder magnetische Haltkräfte wirken. Die Greifelemente können zum Beispiel mit einem jeweiligen Greifarm gebildet sein. Elastisch nachgebende Greifelemente können vorgesehen sein, um auf diese Weise eine Spannkraft bereitzustellen. So kann vorgesehen sein, dass einander gegenüberliegende Greifelemente der Greifeinrichtung beim Übernehmen der Spulenelemente elastisch auseinander gedrückt werden gegen eine Vorspannkraft, sodass der gegriffene Abschnitt des Spulenelements hierdurch an der Greifeinrichtung gehalten wird. Die Greifelemente können einen V-förmigen Aufnahmespalt ausbildend angeordnet sein, welcher sich auf der dem Spulenelement gegenüberliegende Seite erweitert, um so zum Beispiel ein leichteres Einbringen des Spulenelements zwischen die Greifelemente zu unterstützen. Abschnitte der Greifeinrichtung, insbesondere der Greifelemente, die beim Übernehmen der Spulenelemente mit diesen in Kontakt kommen, können eine rutschhemmende Oberfläche aufweisen. Hier kann zum Beispiel ein Überzug aus einem Gummi- oder Kunststoffmaterial zum Einsatz kommen. Die Greifeinrichtung wird zum Übernehmen des Spulenelements von der Verlagerungseinrichtung zwischen einer eingefahrenen und einer ausgefahrenen Stellung verlagert, in welcher das Übernehmen des Spulenelements ausgeführt wird. Hierbei kann vorgesehen sein, dass zum Übernehmen der Spulenelemente das zugeordnete Greifelement aus einer eingefahrenen in einer ausgefahrenen Stellung verlagert wird. Die Verlagerung zwischen der eingefahrenen und der ausgefahrenen Stellung wird in Bezug auf eine Werkstückträgerachse in radialer Richtung ausgeführt . Das Ausfahren erfolgt dann von radial innen nach radial außen.

Das Verlagern der Greifeinrichtung, insbesondere von Greifelementen der Greifeinrichtung, zwischen der eingefahrenen und der ausgefahrenen Stellung kann beispielsweise vermeiden, dass die Greifeinrichtungen das Zustellen des Spulenelements auf den Werkstückträger mithilfe der Verlagerungseinrichtung behindern. Erst wenn das Spulenelement in der zugeordneten proximalen Stellung am Werkstückträger angeordnet ist, wird die zugeordnete Greifeinrichtung ausgefahren, um das Spulenelement zu übernehmen. Allgemein kann vorgesehen sein, dass nach einem ersten Zustellen des Spulenelements auf den Werkstückträger mittels der Verlagerungseinrichtung in der proximalen Stellung des Spulenelements am Werkstückträger noch lokale Verschiebungen oder Verlagerungen des Spulenelements in der proximalen Stellung ausgeführt werden, um dessen Lage zu optimieren. Hierbei kann vorgesehen sein, dass die Greifeinrichtung erst dann, also nach dem zusätzlichen lokalen Verlagern, das Spulenelement übernimmt. Die Relativbewegung zwischen Spulenelement und Greifeinrichtung beim Übernehmen kann teilweise oder vollständig in radialer Richtung in Bezug auf die Werkstückträgerachse erfolgen, insbesondere dadurch, dass das Verlagern der Greifeinrichtung zwischen der eingefahrenen und der ausgefahrenen Stellung in radialer Richtung erfolgt. In diesem Prozess besteht insbesondere die Möglichkeit der Integration von sekundären Montage- oder Ausrichtprozessen.

Die Greifeinrichtung kann beim Verlagern zumindest abschnittsweise in einer Öffnung eines Wandabschnitts des Werkstückträgers verlagert werden. Der Wandabschnitt mit der Öffnung kann beispielsweise Teil eines Gehäuses des Werkstückträgers sein. In der eingefahrenen Stellung ist die Greifeinrichtung teilweise oder vollständig hinter der Öffnung des Wandabschnitts angeordnet.

Die Greifeinrichtung kann mittels einer hieran funktionell koppelnden Betätigungseinrichtung zwischen der eingefahrenen und der ausgefahrenen Stellung verlagert werden, die an dem Werkstückträger angeordnet sein. Die Betätigungseinrichtung koppelt funktionell derart an die Greifeinrichtung, dass diese zum Übernehmen der Spulenelemente ausgefahren wird, Hierbei kann vorgesehen sein, dass ein Betätigungselement der Betätigungseinrichtung, beispielsweise ein Stößel oder Schieber, in Bezug auf die Werkstückträgerachse axial verlagert wird, um das Ausfahren der Greifeinrichtung in radialer Richtung zu bewirken. Es kann vorgesehen sein, dass eine Schrägfläche an dem Betätigungselement mit der Greifeinrichtung zusammenwirkt, insbesondere Greifelementen, um diese beim axialen Vorschub des Betätigungselements radial nach außen in die ausgefahrene Stellung zu bewegen. An der Greifeinrichtung kann eine korrespondierende Schrägfläche vorgesehen sein. Die Betätigungseinrichtung kann in einem Gehäuse des Werkstückträgers angeordnet sein. Andere Mechanismen können vorgesehen sein, um eine Verlagerung der Greifeinrichtung zwischen der eingefahrenen und der ausgefahrenen Stellung zu bewirken. Beispielsweise kann ein Abschnitt der Greifeinrichtung in einem Feld einer elektrischen Spule angeordnet sein, um mittels einer Spulensteuerung eine Verlagerung der Greifeinrichtung zu steuern.

Die Greifeinrichtung kann eine Sicherungseinrichtung aufweisen, die eingerichtet ist, ein unbeabsichtigtes Lösen des Spulenelements nach dem Übernehmen zu vermeiden. Die Sicherungseinrichtung kann am distalen Ende der Greifeinrichtung, insbesondere am distalen Ende von Greifelementen, welches vor dem Übernehmen der Spulenelemente diesen gegenüberliegend angeordnet ist, endseitige Vorsprünge aufweist, die ein unbeabsichtigtes Lösen der Spulenelemente behindern. Zum Beispiel können die Vorsprünge einander gegenüberliegend an benachbarten Greifelementen vorgesehen sein.

Beim Übernehmen des Spulenelements von der Verlagerungseinrichtung wird durch die zugeordnete Greifeinrichtung einer Relativbewegung zwischen dem Spulelenelement und der Greifeinrichtung in einer Richtung radial zu einer Werkstückträgerachse ausgeführt. Die Werkstückträgerachse kann eine Längsachse, insbesondere eine aufrecht stehende Achse des Werkstückträgers sein.

Beim Zustellen des Spulenelements auf den Werkstückträger wird die Verlagerungseinrichtung mit dem hieran gehaltenen Spulenelement in der Richtung radial zur Werkstückträgerachse verlagert, um das Spulenelement in die proximale Stellung am Werkstückträger zu verlagern. Auf diese Weise wird eine radiale Zustellbewegung ausgeführt.

Das Spulenelement kann nach dem Verlagern in die proximale Stellung in dieser um eine Drehachse geschwenkt werden. Hierbei kann das Spulenelement um eine Drehachse gedreht werden, die in Bezug zu der Werkstückträgerachse (axiale Achse) im Wesentlichen parallel verläuft. Das Spulenelement wird so aus einer Anfangsstellung in eine gedrehte Stellung überführt. Hierbei kann vorgesehen sein, dass ein Arm des Spulenelements an den Werkstückträger gehalten wird und ein gegenüberliegender Arm des Spulenelements mittels Drehen verlagert wird, nämlich aus einer in Bezug auf den Werkstückträger zunächst distalen Stellung in eine proximale Stellung.

Das Spulenelement kann nach dem Übernehmen durch die Greifeinrichtung mittels einer Andruckeinrichtung in diese hinein nachgedrückt werden. Hierfür kann ein Andruckschieber vorgesehen sein. Die Andruckeinrichtung kann eine Druckkraft in radialer Richtung in Bezug auf die Werkstückträgerachse bereitstellen, um das Spulenelement hiermit zu beaufschlagen. Der Andruckschieber kann alternativ oder ergänzend vorgesehen sein, um das Spulenelement zum Übernehmen von der Verlagerungseinrichtung in Richtung der Greifeinrichtung oder gegen diese zu drücken.

In Verbindung mit der Vorrichtung zum Herstellen der Anordnung von Spulenelementen für die Steckspule können die vorangehend im Zusammenhang mit dem Verfahren erläuterten Ausgestaltungen entsprechend vorgesehen sein.

Die Vorrichtung kann an dem Werkstückträger eine umlaufende Anordnung von Greifeinrichtungen für die Spulenelemente aufweisen. Einer oder mehreren der Greifeinrichtungen kann eine jeweilige Verlagerungseinrichtung zum Zustellen des Spulenelements zugeordnet sein. In einer Ausgestaltung ist jeder Greifeinrichtung, welche ihrerseits Greifelemente aufweisen kann, jeweils eine Verlagerungseinrichtung zugeordnet. Die Anordnung der Greifeinrichtungen und der Verlagerungseinrichtungen kann entlang des Umfangs des Werkstückträgers durchgehend ausgebildet sein.

An dem Werkstückträger können zum Greifen und Halten eines einzelnen Spulenelements mehrere Greifeinrichtungen vorgesehen sein, insbesondere zwei Greifeinrichtungen, die das Spulenelement simultan von der Verlagerungseinrichtung übernehmen und dann halten. Beispielsweise können zwei Greifeinrichtungen, die gemeinsam ein Spulenelement übernehmen und halten übereinander angeordnet sein. Zum Übernehmen können die Greifeinrichtungen, die gemeinsam ein Spulenelement halten, simultan mittels der Betätigungseinrichtung betätigbar sein. Hierzu können bei der Betätigungseinrichtung beispielsweise übereinander angeordnete Betätigungselemente an dem Werkstückträger vorgesehen sein, beispielsweise Schieber mit einer Schrägfläche, um die Greifeinrichtungen in radialer Richtung auszufahren. Alternativ können die einem Spulenelement zugeordneten Greifeinrichtungen auch zeitversetzt das Spulenelement übernehmen.

Bei der Verlagerungseinrichtung, mit der die Spulenelemente jeweils aufgenommen und zum Zustellen auf den Werkstückträger gehalten werden, kann vorgesehen sein, dass das Spulenelement mit mindestens einem Arm oder Armabschnitt in eine Aufnahme eingesteckt oder eingestellt ist, beispielsweise eine rohrförmige Aufnahme, in welcher der Armabschnitt des Spulenelements lösbar angeordnet ist. Beim Ausbilden der Anordnung von Spulenelementen wird das Spulenelement, mit dem Armabschnitt in der Aufnahme stehend, auf den Werkstückträger zugestellt. Wenn für das Spulenelement an dem Werkstückträger eine Haltekraft ausgebildet ist, kann die Verlagerungseinrichtung von dem Spulenelement zurückgefahren werden, sodass der Armabschnitt des Spulenelements aus der Aufnahme heraus bewegt. Nachfolgend kann die Verlagerungseinrichtung von dem Werkstückträger entfernt werden.

Die Anordnung des Armabschnitts des Spulenelements in der Aufnahme der Verlagerungseinrichtung ermöglicht das Drehen des Spulenelements, nachdem dieses auf den Werkstückträger zugestellt wurde.

Wird das Spulenelement nach dem Lösen aus der Verlagerungseinrichtung an den Werkstückträger mit einer ersten Haltekraft gehalten, beispielsweise mithilfe des Andruckschiebers, so kann dieser benutzt werden, um nach dem Entfernen der Verlagerungseinrichtung, insbesondere dem Lösen des Armabschnitts des Spulenelements aus der Aufnahme an der Verlagerungseinrichtung, das Spulenelement ergänzend oder zusätzlich gegen den Werkstückträger zu drücken, beispielsweise gegen die Greifeinrichtung.

### Beschreibung von Ausführunqsbeispielen

Im Folgenden werden weitere Ausführungsbeispiele unter Bezugnahme auf Figuren einer Zeichnung näher erläutert. Hierbei zeigen:
- Fig. 1: eine schematische Darstellung einer Vorrichtung zum Herstellen einer Anordnung von Spulenelementen für eine Steckspule einer elektrischen Maschine, wobei mithilfe einer Verlagerungseinrichtung ein jeweiliges Spulenelement aufgenommen ist;
- Fig. 2: eine schematische Darstellung der Vorrichtung aus Fig. 1, wobei die Spulenelemente jeweils auf dem Werkstückträger zugestellt sind;
- Fig. 3: eine schematische Darstellung der Vorrichtung aus Fig. 1, wobei die noch an der Verlagerungseinrichtung aufgenommenen Spulenelemente gedreht wurden;
- Fig. 4: eine schematische Darstellung der Vorrichtung aus Fig. 1, wobei die Spulenelemente an dem Werkstückträger mittels eines jeweiligen Schiebers gegen den Werkstückträger gedrückt und so hieran gehalten werden;
- Fig. 5: eine schematische Darstellung der Vorrichtung aus Fig. 1, wobei die Spulenelemente von der Verlagerungseinrichtung gelöst sind;
- Fig. 6: eine schematische Darstellung der Vorrichtung aus Fig. 1, wobei mittels der Schieber die Spulenelemente gegen den Werkstückträger nachgedrückt werden;
- Fig. 7: eine schematische Darstellung der Vorrichtung aus Fig. 1, wobei die Spulenelemente jeweils mit zwei übereinander angeordneten Greifeinrichtungen an den Werkstückträger gegriffen und von diesen am Werkstückträger gehalten werden;
- Fig. 8: eine schematische Darstellung der Vorrichtung aus Fig. 1, wobei die Verlagerungseinrichtung und die Schieber von dem Werkstückträger wegbewegt werden;
- Fig. 9: eine schematische Darstellung der Vorrichtung aus Fig. 1, wobei die Verlagerungseinrichtung und die Schieber weiter von dem Werkstückträger wegbewegt werden, insbesondere in eine gegenüber dem Werkstückträger erhöhte Stellung;
- Fig. 10: eine schematische Darstellung des Werkstückträgers der Vorrichtung aus Fig. 1, wobei mehrere Lagen für die Anordnung von Spulenelementen hergestellt sind;
- Fig. 11: eine schematische Darstellung des Werkstückträgers aus Fig. 10, wobei die Anordnung von Spulenelementen mit einem Übergabegreifer gegriffen wird;
- Fig. 12: eine schematische Darstellung des Werkstückträgers aus Fig. 10, wobei die Anordnung von Spulenelementen mittels des Übergabegreifers von dem Werkstückträger abgenommen ist; und
- Fig. 13: eine schematische Darstellung einer weiteren Vorrichtung zum Herstellen einer Anordnung von Spulenelementen für eine Steckspule einer elektrischen Maschine.

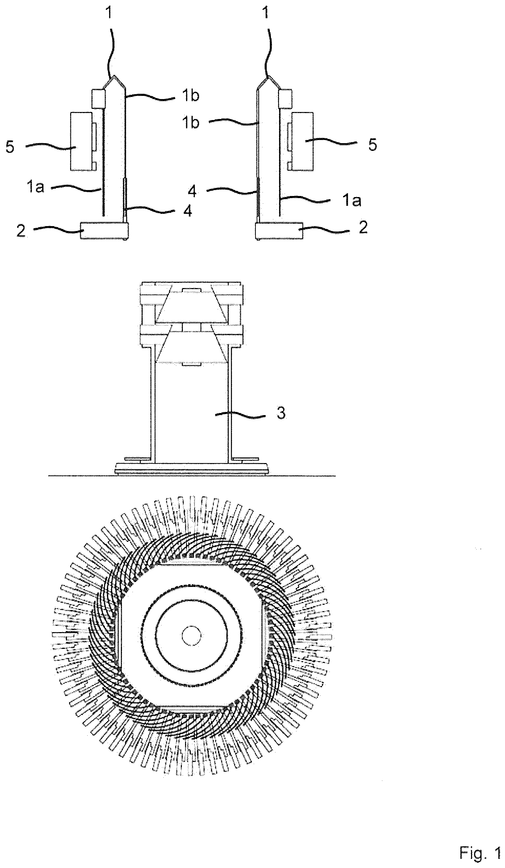

Fig. 1 zeigt eine schematische Darstellung einer Vorrichtung zum Herstellen einer Anordnung von Spulenelementen für eine Steckspule einer elektrischen Maschine. In Fig. 1, wie auch in den weiteren Figuren, ist die Vorrichtung in Vorder- und in Draufsicht dargestellt (obere und untere Darstellung).

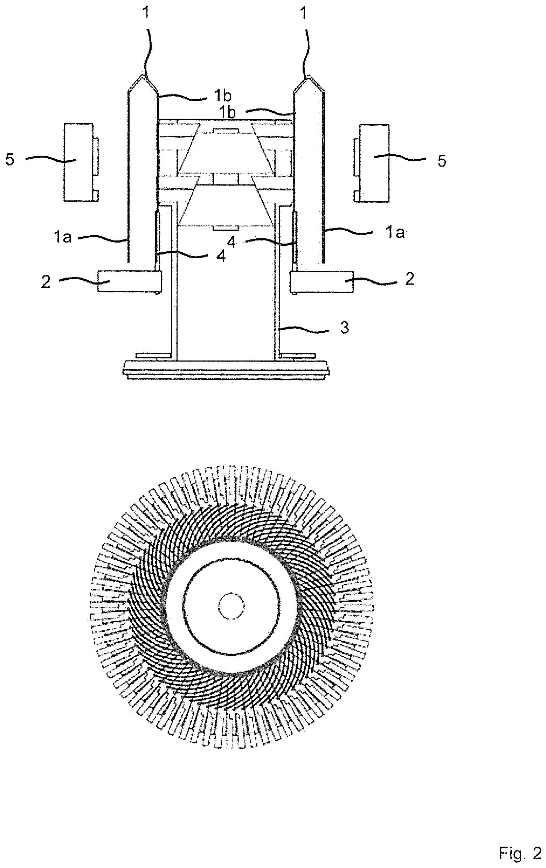

Spulenelemente 1 werden jeweils mithilfe einer zugeordneten Verlagerungseinrichtung 2 aufgenommen und gehalten, um die Spulenelemente 1 mittels der Verlagerungseinrichtung 2 auf einen Werkstückträger 3 zuzustellen, was in Fig. 2 gezeigt ist. Die Verlagerungseinrichtung 2 mit dem Spulenelement 1 wird hierbei aus einer distalen Stellung in die in Fig. 2 gezeigte proximale Stellung am Werkstückträger 3 verlagert. Gemäß dem gezeigten Beispiel in Fig. 1 ist die distale Stellung erhöht gegenüber dem Werkstückträger 3.

Bei der in den Fig. 1 und 2 dargestellten Ausführungsform wird die Verlagerungseinrichtung 2 dann mit dem Spulenelement 1 zunächst abgesenkt auf die Höhe des Werkstückträgers 3 und dann in Bezug auf eine sich durch den Werkstückträger 3 erstreckende Werkstückträgerachse in radialer Richtung zugestellt. Alternativ kann der Werkstückträger 3 angehoben werden. Bei anderen Ausführungsformen kann vorgesehen sein, dass das Spulenelement 1 durch die Verlagerungseinrichtung 2 bereits auf Höhe des Werkstückträgers 3 und diesem gegenüberliegend aufgenommen wird, sodass ausschließlich eine Zustellbewegung in radialer Bewegung stattfindet.

Gemäß der beispielhaft gezeigten Ausführungsform ist eine um den Werkstückträger 3 umlaufend durchgehend gebildete Anordnung von Verlagerungseinrichtungen 2 vorgesehen, die im Betrieb jeweils ein Spulenelement 1 aufnehmen und dieses auf den Werkstückträger 3 zustellen. Dieses kann für alle Verlagerungseinrichtungen 2 simultan oder zeitversetzt einzelne der Verlagerungseinrichtungen 2 oder Gruppen hiervon erfolgen.

Die Spulenelemente 1 sind bei der gezeigten Ausführungsform als ein so genannter Hairpin ausgeführt, der Arme 1a, 1b aufweist, Es können andere stabförmige Spulenelemente vorgesehen sein, um die Anordnung von Spulenelementen herzustellen, beispielsweise stabförmige Spulenelemente mit einer U-Form.

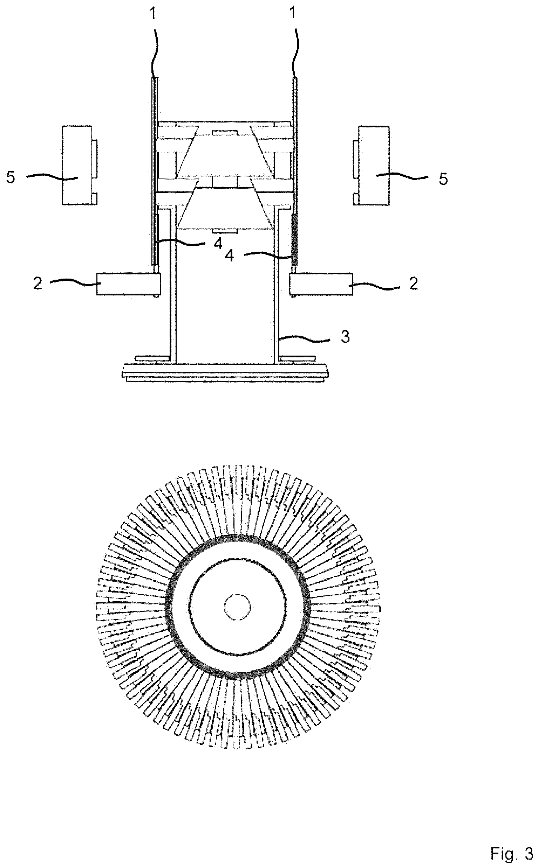

Gemäß den Fig. 1 und 2 ist ein Arm 1b des Spulenelements 1 in einer Aufnahme 4 der Verlagerungseinrichtung 2 angeordnet. Bei der gezeigten Ausführung ist die Aufnahme 4 rohrförmig ausgeführt, zum Beispiel als Hülse mit Boden. Der Arm 1b des Spulenelements 1 ist in die Aufnahme 4 eingesteckt oder eingestellt, derart, dass das Spulenelement 1 nach dem Zustellen auf den Werkstückträger 3 gedreht werden kann, was in Fig. 3 schematisch dargestellt ist. Der Arm 1a des Spulenelements 1 wird hierbei in Bezug auf den Werkstückträger 3 aus einer zunächst distalen Stellung in eine proximale Stellung verlagert, was mittels der Drehbewegung ausgeführt wird. Der Arm 1b des Spulenelements 1 in der Aufnahme 4 bildet eine Drehachse, um die die Drehung oder Rotation erfolgt. Das Drehen erfolgt mithilfe eines Betätigungsmittels (nicht dargestellt), welches eine gewünschte Drehkraft auf das Spulenelement 1 ausüben kann.

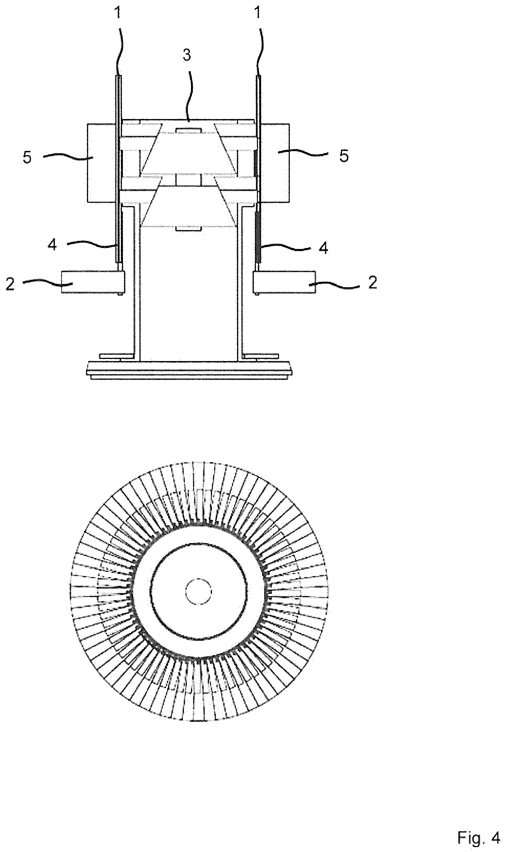

Nach dem Drehen wird das Spulenelement 1 mithilfe einer Andruckeinrichtung 5, die bei der gezeigten Ausführungsform mit einem Schieber gebildet ist, gegen den Werkstückträger 3 gedrückt, um das Spulenelement 1 hieran zu lokalisieren und zu halten. Zu diesem Zweck wird die Andruckeinrichtung 5 auf den Werkstückträger 3 zugestellt (vgl. Fig. 4).

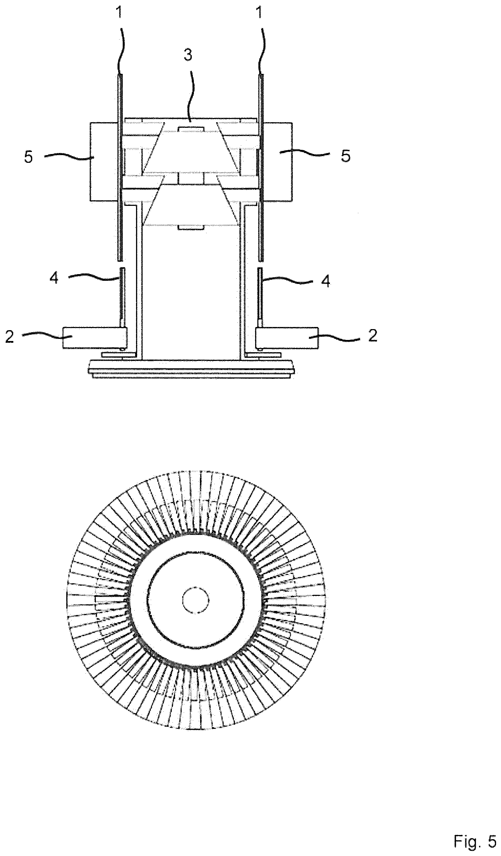

Danach kann das Spulenelement 1 von der Verlagerungseinrichtung 2 gelöst werden, wie dies Fig. 5 zeigt. Die Verlagerungseinrichtung 2 mit der Aufnahme 4 wird nach unten bewegt, um den Arm 1b des Spulenelements 1 aus der Aufnahme 4 zu lösen.

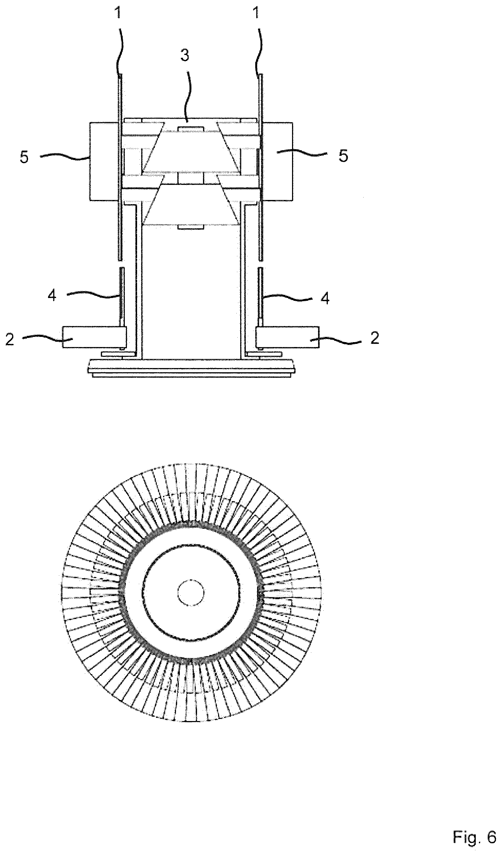

Gemäß Fig. 6 erfolgt mittels der Andruckeinrichtung 5 ein Nachsetzen, Nachdrücken oder Nachstellen des Spulenelements 1 gegen den Werkstückträger 3, welches hierbei (ergänzend) gegen Greifelemente 6, 7 einer Greifeinrichtung 8 gedrückt wird, die dem jeweiligen Spulenelement 1 am Werkstückträger 3 zugeordnet ist und zum Greifen und Halten der Spulenelemente 1 dient. Bei der Darstellung in Fig. 6 sind die Greifelemente 6, 7 noch in einer eingefahrenen Stellung, derart, dass das Spulenelement 1 mittels der Andruckeinrichtung 5 zwischen distalen Enden 6a, 7a der Greifelemente 6, 7 und der Andruckeinrichtung 5 an dem Werkstückträger 3 gehalten werden kann.

Nach dem dargestellten Ausführungsbeispiel sind jedem Spulenelemente 1 zwei Greifeinrichtungen 8 zugeordnet, die übereinander angeordnet sind und jeweils beide zusammen das Spulenelement 1 greifen und dann halten.

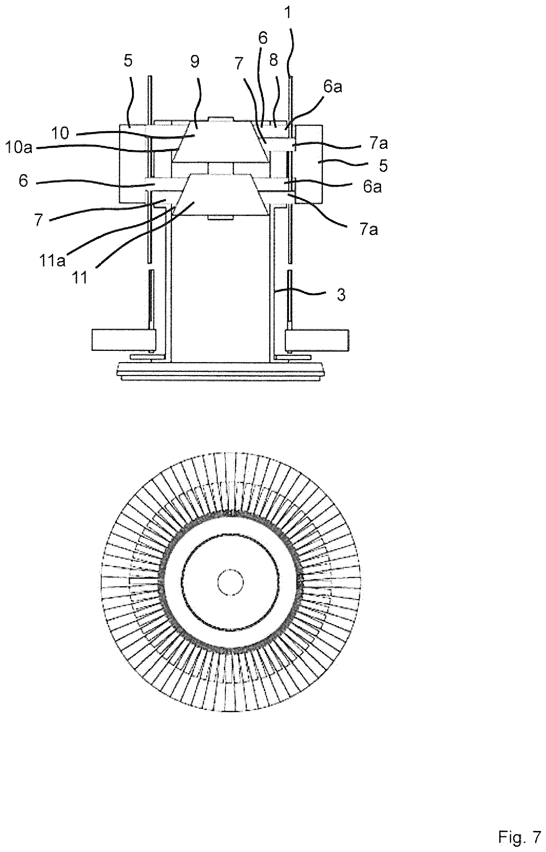

Gemäß Fig. 7 werden die Greifelemente 6, 7 mittels einer Bewegung nach radial außen in eine ausgefahrene Stellung verlagert, um das Spulenelement 1 jeweils zu übernehmen, also zu greifen und zu halten. Hierzu wird eine Betätigungseinrichtung 9 an dem Werkstückträger 3 genutzt, die bei der gezeigten Ausführung Betätigungselemente 10, 11 mit jeweiliger Schrägfläche 10a, 11a aufweist. Die Verlagerung der Betätigungselemente 10, 11 in axialer Richtung bewirkt ein Ausfahren der jeweiligen Greifelemente 6, 7, die beispielsweise jeweils einen Greifarm aufweisen, nach außen, um das jeweilige Spulenelement 1 zu greifen. Hierbei wird das Spulenelement 1 zwischen den Greifelementen 6, 7 jeweils gespannt und gehalten. Die übereinander angeordneten Greifeinrichtungen werden so simultan betätigt.

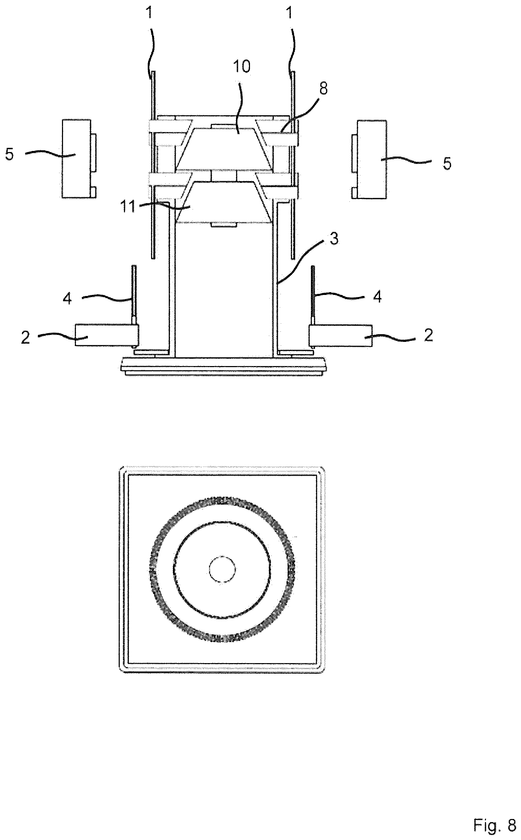

Hierauf kann gemäß Fig. 8 die Andruckeinrichtung 5 von dem Werkzeugträger 3 gelöst werden. Das Spulenelement 1 wird mittels der jeweiligen Greifelemente 6, 7 der Greifeinrichtung 8 am Werkstückträger 3 gehalten.

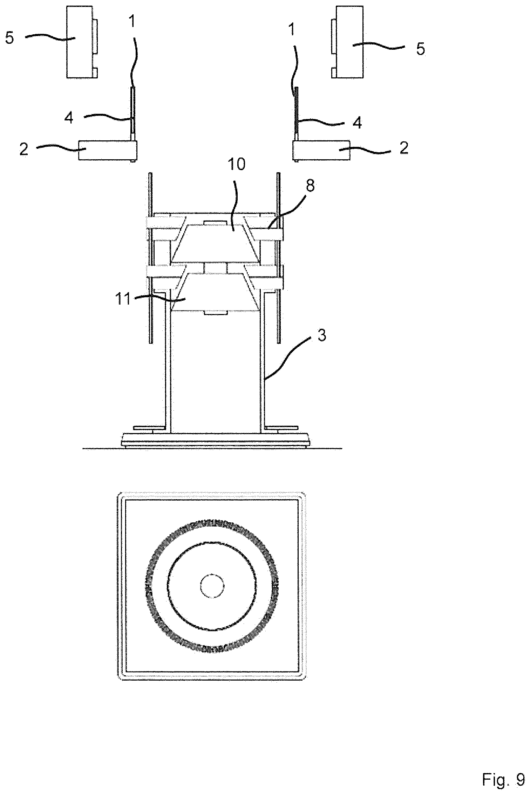

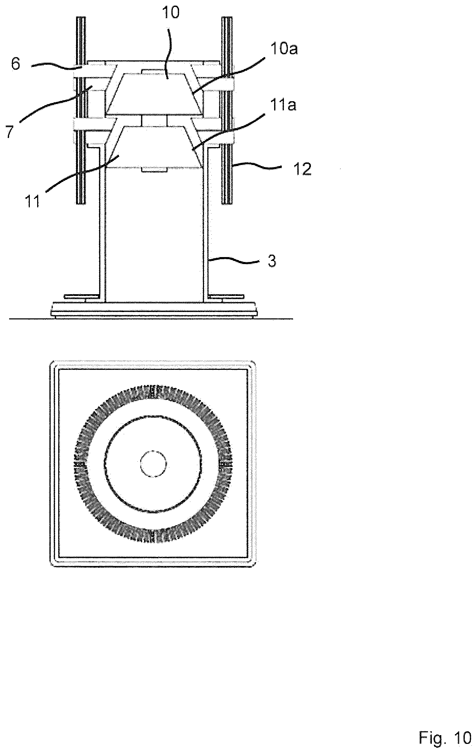

Gemäß Fig. 9 können dann die Verlagerungseinrichtung 2 und die Andruckeinrichtung 5 weiter gegenüber dem Werkstückträger 3 verlagert werden in die erhöhte Stellung, um beispielsweise erneut ein jeweiliges Spulenelement 1 aufzunehmen und für die Herstellung der Anordnung von Spulenelementen 1 an dem Werkstückträger 3 auf diesen zuzustellen, sodass eine mehrlagige Anordnung 12 von Spulenelementen 1 hergestellt wird, wie dies Fig. 10 zeigt.

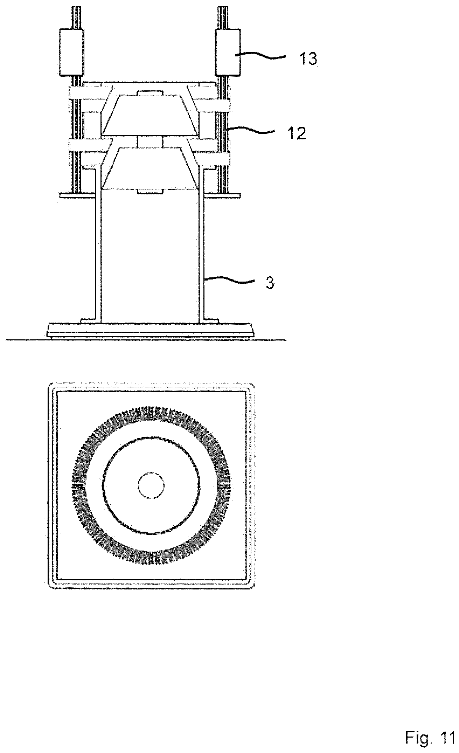

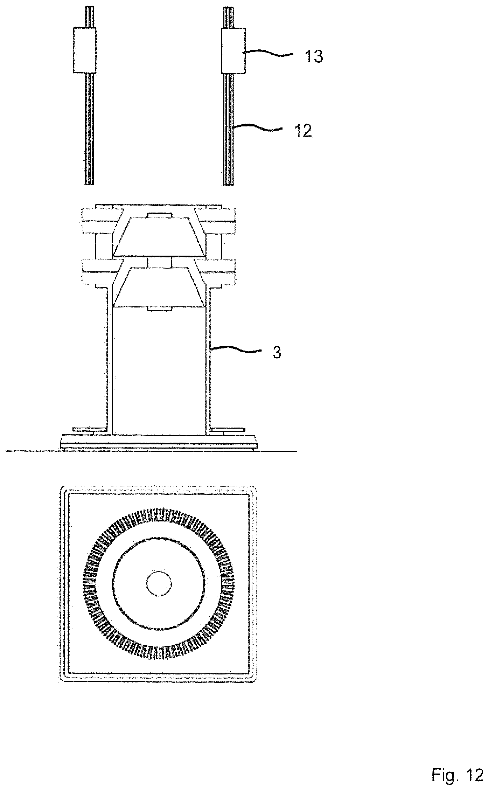

Mithilfe eines Übergabegreifers 13 wird die mehrlagige Anordnung 12 von Spulenelementen 1 gemäß den Fig. 11 und 12 aufgenommen und von dem Werkstückträger 3 gelöst, wobei die Arme 1a, 1b der Spulenelemente 1 hierbei aus der Greifeinrichtung 8 herausgeführt werden, beispielsweise dadurch, dass eine Reibungskraft zwischen dem Spulenelement 1 und den Greifelementen 6, 7 überwunden wird. Zum Lösen der Spulenelemente 1 aus der Greifeinrichtung 8 kann vorgesehen sein, die Spannkraft, die mit den Greifelementen 6, 7 auf die Spulenelemente 1 ausgeübt wird, zu verringern, um das Lösen zu erleichtern.

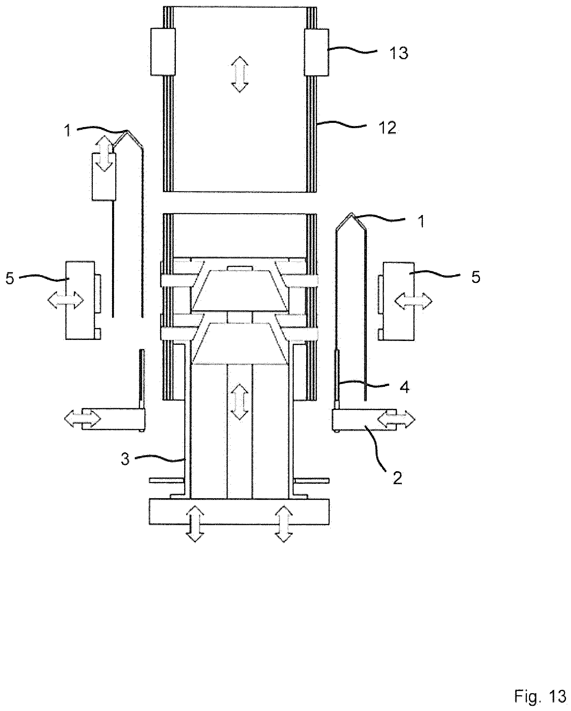

Fig. 13 zeigt eine schematische Darstellung einer weiteren Vorrichtung zum Herstellen einer Anordnung von Spulenelementen 1 für eine Steckspule einer elektrischen Maschine. Für die gleichen Merkmale werden in Fig. 13 dieselben Bezugszeichen wie in den Fig. 1 bis 12 verwendet. Die Vorrichtung verfügt über einen ortsfesten Stationsaufbau, der beispielsweise bei kleineren Herstellungsstückzahlen von Anordnungen für Spulenelemente zum Einsatz kommen kann.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Verfahren zum Herstellen einer Anordnung von Spulenelementen (1) für eine Steckspule einer elektrischen Maschine, mit den folgenden Schritten:
- Bereitstellen eines Werkstückträgers (3) und
- Herstellen einer mindestens einlagigen Anordnung von stabförmig ausgebildeten Spulenelementen (1) für eine Steckspule einer elektrischen Maschine an dem Werkstückträger (3), wobei hierbei für die stabförmigen Spulenelemente (1) jeweils Folgendes vorgesehen ist:
- Aufnehmen und Halten des Spulenelements (1) mittels einer Verlagerungseinrichtung (2);
- Zustellen des Spulenelements (1) auf den Werkstückträger (3) mittels der Verlagerungseinrichtung (2) in eine zugeordnete proximale Stellung am Werkstückträger (3), wobei die Spulenelemente (1) hierbei in Bezug auf den Werkstückträger (3) aus einer distalen Stellung in die zugeordnete proximale Stellung verlagert werden und die Verlagerungseinrichtung (2) mit dem hieran gehaltenen Spulenelement (1) in der Richtung radial zu einer Werkstückträgerachse verlagert wird, um das Spulenelement (1) in die proximale Stellung am Werkstückträger (3) zu verlagern; und
- Übernehmen des Spulenelements (1) in der proximalen Stellung am Werkstückträger (3) von der Verlagerungseinrichtung (2) durch eine Greifeinrichtung (8), die an dem Werkstückträger (3) gebildet ist, wobei hierbei eine Relativbewegung zwischen dem Spulenelement (1) und der Greifeinrichtung (8) in einer Richtung radial zur Werkstückträgerachse ausgeführt wird;
wobei
- die Greifeinrichtung (8) zum Übernehmen des Spulenelements (1) von der Verlagerungseinrichtung (2) zwischen einer eingefahrenen und einer ausgefahrenen Stellung radial nach außen verlagert wird, in welcher das Übernehmen des Spulenelements (1) ausgeführt wird; und
- beim Übernehmen des Spulenelementes (1) durch die Greifeinrichtung (8) Greifelemente (6, 7) der Greifeinrichtung (8) mittels einer Bewegung nach radial außen in eine ausgefahrene Stellung das Spulenelement (1) greifen und halten und wobei die mindestens einlagige Anordnung der Spulenelemente (1) nach dem Übernehmen der Spulenelemente (1) mittels der Greifeinrichtung (8) an dem Werkstückträger (3) gehalten wird.

2. Verfahren nach Anspruch 1, **dadurch gekennzeichnet, dass** die Greifeinrichtung (8) beim Verlagern zumindest abschnittsweise in einer Öffnung eines Wandabschnitts des Werkstückträgers (3) verlagert wird.

3. Verfahren nach Anspruch 1 oder 2, **dadurch gekennzeichnet, dass** die Greifeinrichtung (8) mittels einer hieran funktionell koppelnden Betätigungseinrichtung (9) zwischen der eingefahrenen und der ausgefahrenen Stellung verlagert wird, die an dem Werkstückträger (3) angeordnet ist.

4. Verfahren nach mindestens einem der vorangehenden Ansprüche, **dadurch gekennzeichnet, dass** die Greifeinrichtung (8) eine Sicherungseinrichtung aufweist, die eingerichtet ist, ein unbeabsichtigtes Lösen des Spulenelements (1) nach dem Übernehmen zu vermeiden.

5. Verfahren nach mindestens einem der vorangehenden Ansprüche, **dadurch gekennzeichnet, dass** das Spulenelement (1) nach dem Verlagern in die proximale Stellung in dieser um eine Drehachse geschwenkt wird.

6. Verfahren nach mindestens einem der vorangehenden Ansprüche, **dadurch gekennzeichnet, dass** das Spulenelement (1) nach dem Übernehmen durch die Greifeinrichtung (8) mittels einer Andruckeinrichtung (5) in diese hinein nachgedrückt wird.

7. Vorrichtung zum Herstellen einer Anordnung von Spulenelementen (1) für eine Steckspule einer elektrischen Maschine, mit:
- einem Werkstückträger (3), an dem eine mindestens einlagige Anordnung von stabförmig ausgebildeten Spulenelementen (1) für eine Steckspule einer elektrischen Maschine herstellbar ist;
- einer Verlagerungseinrichtung (2), die eingerichtet ist, zum Herstellen der mindestens einlagigen Anordnung von Spulenelementen (1) an dem Werkstückträger (3) die Spulenelemente (1) jeweils aufzunehmen und zu halten und auf den Werkstückträger (3) zuzustellen, derart, dass die Spulenelemente (1) jeweils in eine zugeordnete proximale Stellung am Werkstückträger (3) verlagert wird, wobei die Spulenelemente (1) hierbei in Bezug auf den Werkstückträger (3) aus einer distalen Stellung in die zugeordnete proximale Stellung verlagert werden und die Verlagerungseinrichtung (2) mit dem hieran gehaltenen Spulenelement (1) in der Richtung radial zu einer Werkstückträgerachse verlagert wird, um das Spulenelement (1) in die proximale Stellung am Werkstückträger (3) zu verlagern; und
- einer Greifeinrichtung (8), die eingerichtet ist, zum Herstellen der mindestens einlagigen Anordnung von Spulenelementen (1) an dem Werkstückträger (3) die Spulenelemente (1) jeweils in der proximalen Stellung am Werkstückträger (3) von der Verlagerungseinrichtung (2) zu übernehmen und zu halten, wobei hierbei eine Relativbewegung zwischen dem Spulenelement (1) und der Greifeinrichtung (8) in einer Richtung radial zur Werkstückträgerachse ausgeführt wird;
wobei die Greifeinrichtung (8) weiter eingerichtet ist,
- zum Übernehmen des Spulenelements (1) von der Verlagerungseinrichtung (2) zwischen einer eingefahrenen und einer ausgefahrenen Stellung nach radial außen zu verlagern, wobei in der ausgefahrenen Stellung das Übernehmen des Spulenelements (1) ausführbar ist; und
- beim Übernehmen des Spulenelementes (1) durch die Greifelemente (6, 7) der Greifeinrichtung (8) mittels einer Bewegung nach radial außen in eine ausgefahrene Stellung das Spulenelement (1) zu greifen und zu halten und die mindestens einlagige Anordnung der Spulenelemente (1) nach dem Übernehmen der Spulenelemente (1) an dem Werkstückträger (3) zu halten.

## Claims

1. A method for producing an arrangement of coil elements (1) for a plug-in coil of an electric machine, comprising the following steps:
- providing a workpiece carrier (3) and
- producing at least one single-layer arrangement of rod-shaped coil elements (1) for a plug-in coil of an electric machine on the workpiece carrier (3), wherein the following is provided in each case for the rod-shaped coil elements (1):
- accommodating and holding the coil element (1) by means of a displacement device (2);
- delivery of the coil element (1) onto the workpiece carrier (3) by means of the displacement device (2) into an assigned proximal position on the workpiece carrier (3), wherein the coil elements (1) are displaced with respect to the workpiece carrier (3) from a distal position into the assigned proximal position, and the displacement device (2) with the coil element (1) held thereon is displaced in a direction radial to a workpiece carrier axis in order to displace the coil element (1) into the proximal position on the workpiece carrier (3); and
- taking the coil element (1) in the proximal position on the workpiece carrier (3) from the displacement device (2) by a gripping device (8) which is formed on the workpiece carrier (3), wherein a relative movement is carried out between the coil element (1) and the gripping device (8) in a direction radial to the workpiece carrier axis;
wherein
- the gripping device (8) is displaced radially outwardly between a retracted and an extended position, in which the taking of the coil element (1) is carried out, in order to take the coil element (1) from the displacement device (2); and
- during the taking of the coil element (1) by the gripping device (8) by means of a movement radially outwardly into an extended position, gripping elements (6, 7) of the gripping device (8) grip and hold the coil element (1), and wherein the at least one single-layer arrangement of the coil elements (1) is held by means of the gripping device (8) on the workpiece carrier (3) after the taking of the coil elements (1).

2. The method according to claim 1, **characterized in that** the gripping device (8) is displaced during the displacement at least partially in an opening of a wall section of the workpiece carrier (3).

3. The method according to claim 1 or 2, **characterized in that** the gripping device (8) is displaced between the retracted and the extended position by means of an actuation device (9), which is functionally coupled thereto and is arranged on the workpiece carrier (3).

4. The method according to at least one of the preceding claims, **characterized in that** the gripping device (8) has a securing device which is configured to prevent an unintentional release of the coil element (1) after the taking.

5. The method according to at least one of the preceding claims, **characterized in that** the coil element (1) is pivoted about an axis of rotation in the proximal position after the displacement into said proximal position.

6. The method according to at least one of the preceding claims, **characterized in that**, after the taking by the gripping device (8), the coil element (1) is pressed into said gripping device by means of pressing means (5).

7. A device for producing an arrangement of coil elements (1) for a plug-in coil of an electric machine, comprising:
- a workpiece carrier (3) on which an at least single-layered arrangement of rod-shaped coil elements (1) for a plug-in coil of an electric machine is producible;
- a displacement device (2) which, in order to produce the at least single-layered arrangement of coil elements (1) on the workpiece carrier (3), is configured to respectively accommodate and to hold the coil elements (1) and to deliver the coil elements (1) onto the workpiece carrier (3) in such a way that the coil elements (1) are respectively displaced into an assigned proximal position on the workpiece carrier (3), wherein the coil elements (1) are displaced with respect to the workpiece carrier (3) from a distal position into the assigned proximal position, and the displacement device (2) with the coil element (1) held thereon is displaced in the direction radial to a workpiece carrier axis in order to displace the coil element (1) into the proximal position on the workpiece carrier (3); and
- a gripping device (8) which, in order to produce the at least one single-layer arrangement of coil elements (1) on the workpiece carrier (3), is configured to respectively take the coil elements (1) from the displacement device (2) and to hold the coil elements in the proximal position on the workpiece carrier (3), wherein a relative movement is carried out between the coil element (1) and the gripping device (8) in a direction radial to the workpiece carrier axis;
wherein the gripping device (8) is further configured
- to displace, in order to take the coil elements (1) from the displacement device (2), radially outwardly between a retracted and an extended position, wherein the taking of the coil element (1) can be carried out in the extended position; and
- to grip and to hold the coil element (1) during the taking of the coil element (1) by the gripping elements (6, 7) of the gripping device (8) by means of a movement radially outwardly into an extended position, and to hold the at least single-layered arrangement of the coil elements (1) after the taking of the coil elements (1) on the workpiece carrier (3).

## Revendications

1. Procédé de fabrication d'un agencement d'éléments de bobine (1) pour une bobine embrochable d'une machine électrique, avec les étapes suivantes :
- préparation d'un porte-pièce (3), et
- fabrication d'un agencement d'au moins une couche d'éléments de bobine (1) constitués en forme de tiges pour une bobine embrochable d'une machine électrique sur le porte-pièce (3), sachant que pour les éléments de bobine (1) en forme de tiges, il est respectivement prévu à cet effet ce qui suit :
- logement et maintien de l'élément de bobine (1) au moyen d'un dispositif de déplacement (2),
- placement de l'élément de bobine (1) sur le porte-pièce (3) au moyen du dispositif de déplacement (2) dans une position proximale attribuée sur le porte-pièce (3), sachant que les éléments de bobine (1) sont déplacés à cet effet par rapport au porte-pièce (3) d'une position distale à la position proximale attribuée et le dispositif de déplacement (2) est déplacé avec l'élément de bobine (1) maintenu dessus dans la direction radialement à un axe de porte-pièce pour déplacer l'élément de bobine (1) dans la position proximale sur le porte-pièce (3), et
- transfert de l'élément de bobine (1) dans la position proximale sur le porte-pièce (3) du dispositif de déplacement (2) par un dispositif de préhension (8), qui est formé sur le porte-pièce (3), sachant qu'un mouvement relatif est exécuté à cet effet entre l'élément de bobine (1) et le dispositif de préhension (8) dans une direction radialement à l'axe de porte-pièce,
sachant
- que le dispositif de préhension (8) est déplacé radialement vers l'extérieur pour le transfert de l'élément de bobine (1) par le dispositif de déplacement (2) entre une position rentrée et une position sortie, dans laquelle le transfert de l'élément de bobine (1) est exécuté, et
- que lors du transfert de l'élément de bobine (1) par le dispositif de préhension (8), les éléments de préhension (6, 7) du dispositif de préhension (8) saisissent et maintiennent l'élément de bobine (1) au moyen d'un mouvement vers une position sortie radialement vers l'extérieur et sachant que l'agencement d'au moins une couche des éléments de bobine (1) est maintenu sur le porte-pièce (3) après le transfert des éléments de bobine (1) au moyen du dispositif de préhension (8).

2. Procédé selon la revendication 1, **caractérisé en ce que** le dispositif de préhension (8) est déplacé lors du déplacement au moins en partie dans une ouverture d'une section de paroi du porte-pièce (3).

3. Procédé selon la revendication 1 ou 2, **caractérisé en ce que** le dispositif de préhension (8) est déplacé au moyen d'un système d'actionnement (9) se couplant fonctionnellement à celui-ci entre la position rentrée et la position sortie, qui est disposé sur le porte-pièce (3).

4. Procédé selon au moins l'une quelconque des revendications précédentes, **caractérisé en ce que** le dispositif de préhension (8) comporte un système de sécurisation, qui est agencé pour éviter un desserrage involontaire de l'élément de bobine (1) après le transfert.

5. Procédé selon au moins l'une quelconque des revendications précédentes, **caractérisé en ce que** l'élément de bobine (1), après le déplacement dans la position proximale, est pivoté dans celle-ci autour d'un axe de rotation.

6. Procédé selon l'une quelconque des revendications précédentes, **caractérisé en ce qu'**après le transfert par le dispositif de préhension (8), l'élément de bobine (1) est repoussé à l'intérieur de celui-ci au moyen d'un dispositif de pression (5).

7. Dispositif de fabrication d'un agencement d'éléments de bobine (1) pour une bobine embrochable d'une machine électrique, avec :
- un porte-pièce (3), sur lequel peut être fabriqué un agencement d'au moins une couche d'éléments de bobine (1) constitués en forme de tiges pour une bobine embrochable d'une machine électrique,
- un dispositif de déplacement (2), qui est agencé pour la fabrication de l'agencement d'au moins une couche d'éléments de bobine (1) sur le porte-pièce (3) pour loger et maintenir respectivement les éléments de bobine (1) et les placer sur le porte-pièce (3) de telle manière que les éléments de bobine (1) sont respectivement déplacés sur le porte-pièce (3) dans une position proximale attribuée, sachant que les éléments de bobine (1) sont à cet effet déplacés par rapport au porte-pièce (3) d'une position distale à la position proximale attribuée et le dispositif de déplacement (2) est déplacé avec l'élément de bobine (1) maintenu dessus dans la direction radialement à un axe de porte-pièce pour déplacer l'élément de bobine (1) dans la position proximale sur le porte-pièce (3), et
- un dispositif de préhension (8), qui est agencé pour la fabrication de l'agencement d'au moins une couche d'éléments de bobine (1) sur le porte-pièce (3) pour transférer et maintenir respectivement les éléments de bobine (1) dans la position proximale par le dispositif de déplacement (2) sur le porte-pièce (3), sachant qu'un mouvement relatif est exécuté à cet effet entre l'élément de bobine (1) et le dispositif de préhension (8) dans une direction radialement à l'axe de porte-pièce,
sachant que le dispositif de préhension (8) est en plus agencé,
- pour se déplacer radialement vers l'extérieur pour le transfert de l'élément de bobine (1) par le dispositif de déplacement (2) entre une position rentrée et une position sortie, sachant que dans la position sortie, le transfert de l'élément de bobine (1) peut être exécuté, et
- pour saisir et maintenir l'élément de bobine (1), lors du transfert de l'élément de bobine (1) par les éléments de préhension (6, 7) du dispositif de préhension (8) au moyen d'un mouvement radialement vers l'extérieur dans une position sortie et maintenir l'agencement d'au moins une couche d'éléments de bobine (1) sur le porte-pièce (3) après le transfert des éléments de bobine (1).
